# FASCICULE DE BREVET EUROPEEN

(11) **EP 2 475 560 B1**
(45) Date de publication et mention de la délivrance du brevet: **12.10.2016**
(21) Numéro de dépôt: 10737942.2
(22) Date de dépôt: 06.08.2010
(51) Int. Cl.: B60T 13/74, B60T 7/04

(54) **SYSTÈME DE FREINS À MAÎTRE-CYLINDRE ET SERVOFREIN ÉLECTRIQUE**
BREMSSYSTEM MIT HAUPTBREMSZYLINDER UND ELEKTRISCHEM BREMSKRAFTVERSTÄRKER
BRAKING SYSTEM COMPRISING A MASTER CYLINDER AND AN ELECTRIC BRAKE BOOSTER

(30) Priorité: 07.09.2009 FR 0904279
(43) Date de publication de la demande: 18.07.2012
(73) Titulaire: Robert Bosch GmbH, 70442 Stuttgart (DE)
(72) Inventeur: RICHARD, Philippe, F-77500 Chelles (FR); CAGNAC, Bastien, F-60500 Chantilly (FR); GAFFE, François, F-93140 Bondy (FR)
(86) Numéro de dépôt international: PCT/EP2010/061471
(87) Numéro de publication internationale: WO 2011/026710

(56) Documents cités:
- DE-A1- 10 057 557
- FR-A1- 2 860 474

## Description

### Domaine de l'invention

La présente invention concerne un système de freins à maître-cylindre et servofrein électrique comportant un piston d'actionneur manoeuvré par le servofrein et agissant sur le maître-cylindre par une tige de poussée appuyée sur un disque de réaction également soumis à l'action directe du piston plongeur retenu par une butée arrière dans le piston d'assistance entraîné par le piston d'actionneur.

### Etat de la technique

De tels systèmes de freins sont connus notamment selon le document FR 03 11 580 ou le FR2860474 A1. Ce système de freins est intéressant mais il ne comporte pas de liberté de translation entre le servofrein qui est une vis à billes et le piston d'assistance.

### But de l'invention

La présente invention a pour but de développer un système de freins du type défini ci-dessus permettant d'offrir un degré de liberté en translation entre le servofrein et le piston d'assistance pour gagner en dynamique de freinage même en cas de défaillance de la transmission.

### Exposé et avantageas de l'invention

A cet effet, la présente invention concerne un système de freins défini ci-dessus caractérisée en ce que
- le piston d'assistance est guidé dans le piston d'actionneur formant un cylindre de guidage,
- le piston d'assistance comporte une collerette d'appui pour un ressort de rappel dont l'autre extrémité est appuyée contre le boîtier du maître-cylindre et qui agit dans le sens du retour du piston d'assistance,
- le piston d'assistance comporte à son extrémité avant, une collerette formant une butée et le piston d'actionneur comporte un épaulement à l'avant de la surface de guidage du piston d'assistance et formant une butée d'entraînement unidirectionnel du piston d'assistance par le piston d'actionneur.

Le système de freins selon l'invention offre l'avantage d'un degré de liberté en translation entre le servofrein et le piston d'assistance permettant d'améliorer la dynamique en cas de défaillance de la transmission électrique ou mécanique ou encore si la demande du conducteur est plus dynamique que la réponse que peut fournir la transmission. Globalement, le système offre une meilleure efficacité en cas de défaillance, sans EP 10 737 942 Austauschseite 2 Robert Bosch GmbH 13.01.2016 perte d'efforts dans la transmission qui serait liée à une inertie ou aux frottements.

De plus, en fonctionnement normal (ou nominal), la dynamique n'est pas limitée en sortie de servofrein par des limitations qui seraient liées à la transmission.

Suivant une autre caractéristique avantageuse de l'invention, le piston d'assistance comporte un manchon communiquant avec le logement du disque de réaction dans le piston d'assistance, recevant et guidant le piston plongeur en formant extérieurement, une gorge avec la jupe prolongeant le piston d'assistance pour recevoir le ressort de rappel du piston plongeur s'appuyant sur une collerette du piston plongeur.

Cette forme de réalisation a l'avantage non seulement de rendre l'ensemble compact mais aussi former une butée contre laquelle peut s'appuyer le piston plongeur en fonctionnement de secours.

Suivant une autre caractéristique avantageuse de l'invention, la jupe qui prolonge le piston d'assistance vers l'arrière, loge un capteur différentiel de course coopérant avec la tige de commande et détectant le mouvement différentiel de la tige de commande.

Suivant une autre caractéristique avantageuse de l'invention, le piston d'assistance est relié au piston d'actionneur par un ergot en saillie, coulissant dans une rainure du piston d'actionneur ou réciproquement pour solidariser en rotation les deux pistons et les laisser libres en translation.

Suivant une autre caractéristique avantageuse de l'invention, la jupe du piston d'assistance est logée dans un manchon extérieur relié au boîtier du servofrein et comportant un organe de retenue traversant une coulisse de la jupe et formant une butée arrière pour la collerette du piston plongeur.

### Dessins

La présente invention sera décrite ci-après de manière plus détaillée à l'aide d'un exemple de réalisation d'un système de freins représenté par son ensemble maître-cylindre / servofrein dans les dessins annexés dans lesquels :
- la figure 1 montre le système de freins en position de fonctionnement normal,
- la figure 2 montre l'ensemble de la figure 1 en position de fonctionnement de secours.

### Description d'un mode de réalisation de l'invention

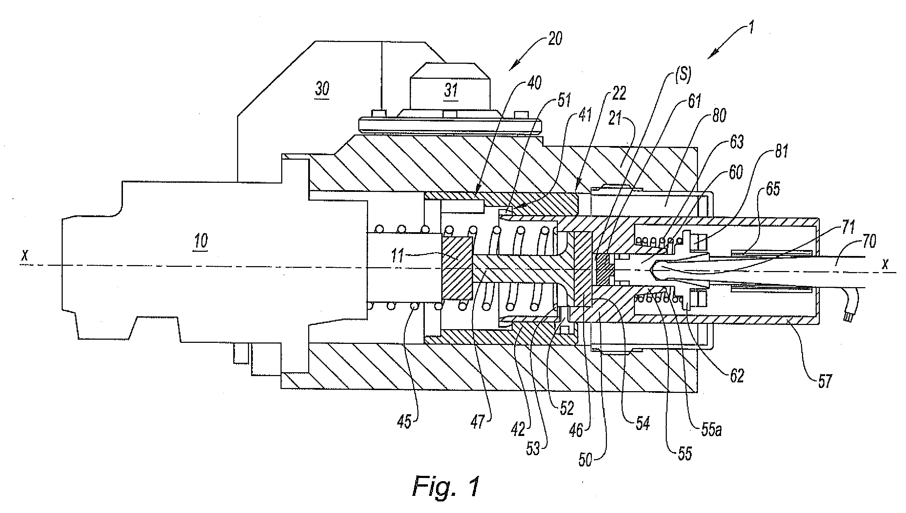

Selon la figure 1, l'invention concerne un système de freins 1 à maître-cylindre 10 et servofrein 20. Le maître-cylindre 10 est de préférence, un maître-cylindre tandem, simplement esquissé par son contour et ne laissant apparaître que son piston 11 (piston primaire) dépassant du boîtier et venant en saillie dans le servofrein 20.

Le servofrein 20 se compose d'un boîtier 21 portant un moteur électrique 30 entraînant par une transmission 31 non détaillée, un piston d'actionneur 40 coulissant dans le cylindre 22 du boîtier 21. Le type de transmission 31, peut être une transmission à vis, une transmission à crémaillère double ou simple.

Le piston d'actionneur 40 est en forme de manchon muni d'un épaulement intérieur 41 limitant vers l'arrière, la partie avant du dégagement formé à l'intérieur du piston d'actionneur 40.

Le piston d'actionneur 40 constitue lui-même un cylindre de guidage recevant le piston d'assistance 50 dont l'extrémité avant est bordée d'une collerette 51 formant une butée périphérique pour la contrebutée constituée par l'épaulement 41 du piston d'actionneur 40. Ainsi, en avançant en direction du maître-cylindre 10, le piston d'actionneur 40 entraîne le piston d'assistance 50 mais inversement, le piston d'assistance 50 peut avancer par rapport au piston d'actionneur 40 indépendamment de ce dernier.

Réciproquement, le mouvement de rappel du piston d'assistance 50 entraîne le piston d'actionneur 40 si la transmission 21 reliant le piston d'actionneur 40 au moteur 30 autorise ce mouvement inverse. Le piston d'assistance 50 et le piston d'actionneur 40 sont solidaires en rotation par l'intermédiaire d'un ergot 52 en saillie de la paroi extérieure du piston d'assistance 50 logée dans une rainure 42 du piston d'actionneur 40.

Le piston d'assistance 50 est ouvert à l'avant par une cavité bordée intérieurement d'un premier épaulement 53 servant d'appui à un ressort de rappel 45 par ailleurs appuyé contre l'extrémité du boîtier du maître-cylindre 10 en entourant le piston primaire 11. La cavité se prolonge par un logement 54 formant un épaulement recevant le disque de réaction 46 contre lequel s'appuie la tige de poussée 47 qui passe librement à l'intérieur du ressort de rappel 45.

Le logement 54 du disque de réaction 46 dans le piston d'assistance 50 est ouvert vers l'arrière autour de l'axe XX et se prolonge par un manchon de guidage 55 pour recevoir un piston intermédiaire 61 susceptible de s'appuyer contre le dos du disque de réaction 46 ; un orifice permet le passage du piston plongeur 60 ou son prolongement, c'est-à-dire le piston intermédiaire 61.

Le piston plongeur 60 guidé dans le manchon de guidage 55 du piston d'assistance 50 est muni à l'arrière, d'une collerette 62 contre laquelle s'appuie le ressort de rappel 63 du piston plongeur 60 ; le ressort de rappel 63 entoure le manchon 55 et s'appuie au fond de la gorge 56 entre le manchon 55 et la jupe 57 du piston d'assistance 50. Le bord arrière 55a du manchon de guidage 55 forme une butée pour la collerette 62 du piston plongeur 60 lorsque celui-ci avance et que le servofrein ne fonctionne pas. La jupe 57 prolonge le piston d'assistance 50 vers l'arrière en direction de la tige de commande 70. Le piston plongeur 60 reçoit la tête 71 en forme de rotule de l'extrémité de la tige de commande 70 par ailleurs reliée à la pédale de frein. Le piston plongeur 60 est retenu dans le piston d'assistance 50 par une clé 81 d'un manchon extérieur 80 lui-même fixé au corps 21 du servofrein 20 et traversant une lumière du piston d'assistance 50 qui est ainsi bloqué en rotation.

La jupe 57 du piston d'assistance 50 est équipée d'un capteur différentiel 65 coopérant avec la tige de commande 70 et permettant de commander le fonctionnement du servofrein 20 selon le déplacement, même léger, mais correspondant au dépassement d'un certain seuil par la tige de commande 70.

La figure 1 montre le mode de fonctionnement normal du servofrein. Le piston d'actionneur 40 entraîne par son épaulement intérieur 41 le piston d'assistance 50 par l'intermédiaire de la collerette de butée 51 de ce dernier. Cet entraînement est transmis par le disque de réaction 46 immédiatement à la tige de poussée 47 qui déplace le piston 11 du maître-cylindre 10 et commande la pression de freinage dans les circuits de frein.

Lorsque la poussée est relâchée sur la tige de commande 70, ce relâchement est détecté par le capteur différentiel de course 65 qui commande l'arrêt du moteur électrique 30 ou, le cas échéant, son inversion pour permettre le retour du piston d'actionneur 40 et, par suite, le retour du piston d'assistance 50.

Pendant ce fonctionnement normal, il subsiste un intervalle (saut S) entre le dos du disque de réaction 46 et la face avant du piston intermédiaire 61 puisque, par principe, en cas de fonctionnement normal du servofrein 20, il n'y a pas d'action directe de la commande par la pédale de frein sur le maître-cylindre 10.

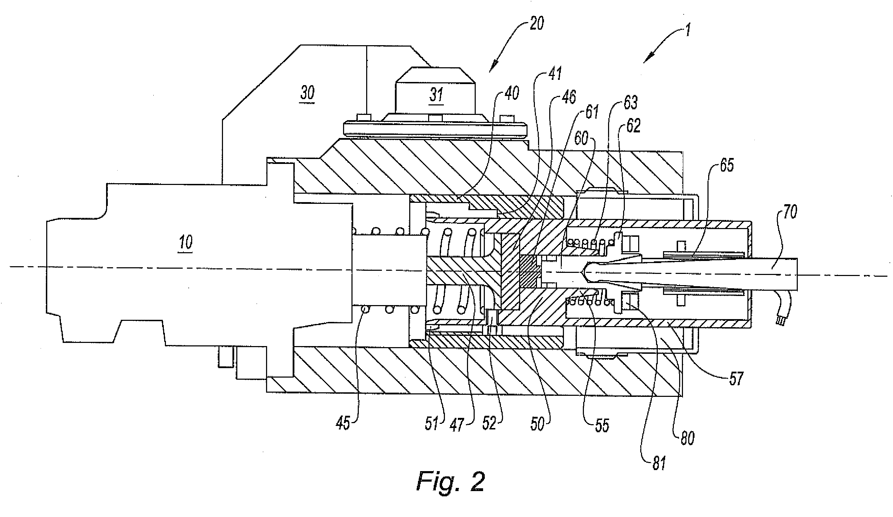

La figure 2 montre le fonctionnement de secours. On suppose pour cela que le moteur 30 du servofrein 20 est défaillant de sorte que même si la poussée exercée sur la tige de commande 70 est détectée par le capteur différentiel de course 65 cette détection ne produit aucun entraînement du piston d'actionneur 40. Lorsque le seuil de poussée (saut) est dépassé, le piston plongeur 60 s'appuie contre le dos du disque de réaction 46 par le piston intermédiaire 61. La poussée exercée sur la pédale de frein est ainsi transmise directement par la tige de commande 70 et le piston intermédiaire 61, au dos du disque de réaction 46 qui lui-même pousse la tige de poussée 47 sans l'assistance du servofrein. Après une certaine course, la partie intérieure de la collerette 62 vient en appui contre le bord arrière 55a du manchon de guidage 55 et le pousse directement pour déplacer la tige de poussée 47.

Ce mouvement est rendu possible par le degré de liberté en translation entre la transmission du servofrein 20, c'est-à-dire le piston d'actionnement 40, et le piston d'assistance 50. On améliore ainsi la dynamique en cas de défaillance de la transmission ou si la demande du conducteur est plus dynamique que la réponse que peut fournir la transmission.

Globalement, on a une meilleure efficacité du système en cas de défaillance mais sans perte d'efforts dans la transmission liée à l'inertie ou aux frottements. En fonctionnement normal (ou fonctionnement nominal), il n'y a pas de limitation de la dynamique en sortie du servofrein et qui serait occasionnée par la transmission.

### NOMENCLATURE

- 1: système de freins
- 10: maître-cylindre
- 11: piston primaire
- 20: servofrein
- 21: boîtier du servofrein
- 22: cylindre du boîtier 21
- 30: moteur électrique
- 31: transmission
- 40: piston d'actionneur
- 41: épaulement intérieur/contre butée
- 42: rainure
- 45: ressort de rappel
- 46: disque de réaction
- 47: tige de poussée
- 50: piston d'assistance
- 51: collerette de butée
- 52: ergot
- 53: épaulement
- 54: logement
- 55: manchon de guidage
- 55a: Extrémité du manchon formant une butée
- 56: gorge
- 57: jupe
- 60: piston plongeur
- 61: piston intermédiaire
- 62: collerette
- 63: ressort de rappel
- 65: capteur différentiel
- 70: tige de commande
- 71: tête
- 80: manchon extérieur
- 81: clé

## Revendications

1. Système de freins à maître-cylindre et servofrein électrique comportant un piston d'actionneur (40) manoeuvré par le servofrein et agissant sur le maître-cylindre (10) par une tige de poussée (47) appuyée sur un disque de réaction (46) également soumis à l'action directe du piston plongeur (60) retenu par une butée arrière dans le piston d'assistance (50) entraîné par le piston d'actionneur (40),
**caractérisé en ce que**
- le piston d'assistance (50) est guidé dans le piston d'actionneur (40) formant un cylindre de guidage,
- le piston d'assistance (50) comporte une collerette d'appui (51) pour un ressort de rappel (45) dont l'autre extrémité est appuyée contre le boîtier du maître-cylindre (10) et qui agit dans le sens du retour du piston d'assistance (50),
- le piston d'assistance (50) comporte à son extrémité avant, une collerette (51) formant une butée et le piston d'actionneur (40) comporte un épaulement (41) à l'avant de la surface de guidage du piston d'assistance (50) et formant une butée d'entraînement unidirectionnel du piston d'assistance (50) par le piston d'actionneur (40).

2. Système de freins selon la revendication 1,
**caractérisé en ce que**
le piston d'assistance (50) comporte un manchon (55) communiquant avec le logement (54) du disque de réaction (46) dans le piston d'assistance (50), recevant et guidant le piston plongeur (60) en formant extérieurement, une gorge (56) avec la jupe (57) prolongeant le piston d'assistance (50) pour recevoir le ressort de rappel (63) du piston plongeur (60) s'appuyant sur une collerette (62) du piston plongeur (60).

3. Système de freins selon la revendication 2,
**caractérisé en ce que**
le manchon (55) forme par son bord arrière (55a) une butée contre laquelle peut s'appuyer la collerette (62) du piston plongeur (60) en cas d'actionnement sur la tige de commande (70) si le servofrein est défaillant.

4. Système de freins selon la revendication 1,
**caractérisé en ce que**
la jupe (57) qui prolonge le piston d'assistance (50) vers l'arrière, loge un capteur différentiel de course (65) coopérant avec la tige de commande (70) et détectant le mouvement différentiel de la tige de commande.

5. Système de freins selon la revendication 1,
**caractérisé en ce que**
le piston d'assistance (50) est relié au piston d'actionneur (40) par un ergot (52) en saillie, coulissant dans une rainure (42) du piston d'actionneur (40) ou réciproquement pour solidariser en rotation les deux pistons (40, 50) et les laisser libres en translation.

6. Système de freins selon la revendication 2,
**caractérisé en ce que**
la jupe (57) du piston d'assistance (50) est logée dans un manchon extérieur (80) relié au boîtier (21) du servofrein (20) et comportant un organe de retenue (81) traversant une coulisse de la jupe (57) et formant une butée arrière pour la collerette (62) du piston plongeur (60).

## Patentansprüche

1. Bremssystem mit Hauptbremszylinder und elektrischem Bremskraftverstärker, umfassend einen Betätigungskolben (40), der von dem Bremskraftverstärker gesteuert wird und auf den Hauptbremszylinder (10) mit einer Schubstange (47) einwirkt, die auf einer Reaktionsscheibe (46) aufliegt, die ebenfalls der direkten Wirkung des Tauchkolbens (60) unterworfen ist, der von einem hinteren Anschlag in dem vom Betätigungskolben (40) angetriebenen Hilfskolben (50) gehalten wird,
**dadurch gekennzeichnet, dass**
- der Hilfskolben (50) in dem Betätigungskolben (40), der einen Führungszylinder bildet, geführt wird,
- der Hilfskolben (50) einen Auflagekragen (51) für eine Rückstellfeder (45) umfasst, deren anderes Ende an dem Gehäuse des Hauptbremszylinders (10) aufliegt und die in die Richtung der Rückführung des Hilfszylinders (50) wirkt,
- der Hilfskolben (50) an seinem vorderen Ende einen Kragen (51) umfasst, der einen Anschlag bildet, und der Betätigungskolben (40) einen Absatz (41) vorne an der Führungsfläche des Hilfskolbens (50) umfasst, der einen Anschlag für den unidirektionalen Antrieb des Hilfskolbens (50) durch den Betätigungskolben (40) bildet.

2. Bremssystem nach Anspruch 1, **dadurch gekennzeichnet, dass** der Hilfskolben (50) eine Hülse (55) umfasst, die mit der Lagerung (54) der Reaktionsscheibe (46) in dem Hilfskolben (50) in Verbindung steht, den Tauchkolben (60) aufnimmt und führt, wobei sie außen eine Rille (56) mit der Schürze (57) bildet, die den Hilfskolben (50) verlängert, um die Rückstellfeder (63) des Tauchkolbens (60), die auf einem Kragen (62) des Tauchkolbens (60) aufliegt, aufzunehmen.

3. Bremssystem nach Anspruch 2, **dadurch gekennzeichnet, dass** die Hülse (55) mit ihrem hinteren Rand (55a) einen Anschlag bildet, an dem der Kragen (62) des Tauchkolbens (60) im Falle einer Betätigung an der Steuerstange (70), wenn der Bremskraftverstärker ausfällt, zur Anlage gelangen kann.

4. Bremssystem nach Anspruch 1, **dadurch gekennzeichnet, dass** die Schürze (57), die den Hilfskolben (50) nach hinten verlängert, einen Differentialwegsensor (65) umfasst, der mit der Steuerstange (70) zusammenwirkt und die Differentialbewegung der Steuerstange erfasst.

5. Bremssystem nach Anspruch 1, **dadurch gekennzeichnet, dass** der Hilfskolben (50) mit dem Betätigungskolben (40) durch einen vorspringenden Haken (52) verbunden ist, der in einer Nut (42) des Betätigungskolbens (40) gleitet, oder umgekehrt um die beiden Kolben (40, 50) in Drehung zu verbinden und sie in Translation frei beweglich zu lassen.

6. Bremssystem nach Anspruch 2, **dadurch gekennzeichnet, dass** die Schürze (57) des Hilfskolbens (50) in einer äußeren Hülse (80) angeordnet ist, die mit dem Gehäuse (21) des Bremskraftverstärkers (20) verbunden ist und ein Halteelement (81) umfasst, das durch eine Gleitführung der Schürze (57) hindurchgeht und einen hinteren Anschlag für den Kragen (62) des Tauchkolbens (60) bildet.

## Claims

1. Braking system with master cylinder and electric brake booster, comprising an actuator piston (40) operated by the brake booster and acting on the master cylinder (10) via a push rod (47) pressed against a reaction disc (46) likewise subjected to the direct action of the plunger piston (60) retained by a rear stop in the booster piston (50) driven by the actuator piston (40),
**characterized in that**
- the booster piston (50) is guided in the actuator piston (40) forming a guide cylinder,
- the booster piston (50) comprises a bearing collar (51) for a return spring (45) of which the other end is pressed against the housing of the master cylinder (10) and which acts in the return direction of the booster piston (50),
- the booster piston (50) comprises at its front end a collar (51) forming a stop and the actuator piston (40) comprises a shoulder (41) at the front of the guide surface for the booster piston (50) and forming a stop for the one-directional driving of the booster piston (50) by the actuator piston (40).

2. Braking system according to Claim 1,
**characterized in that**
the booster piston (50) comprises a sleeve (55) communicating with the housing (54) of the reaction disc (46) in the booster piston (50), receiving and guiding the plunger piston (60) while externally forming a groove (56) with the skirt (57) extending the booster piston (50) to receive the return spring (63) of the plunger piston (60) pressing against a collar (62) of the plunger piston (60).

3. Braking system according to Claim 2,
**characterized in that**
the sleeve (55) forms by way of its rear edge (55a) a stop against which the collar (62) of the plunger piston (60) can press in the case of actuation on the control rod (70) if the brake booster is defective.

4. Braking system according to Claim 1,
**characterized in that**
the skirt (57) which extends the booster piston (50) rearwardly houses a differential travel sensor (65) cooperating with the control rod (70) and detecting the differential movement of the control rod.

5. Braking system according to Claim 1,
**characterized in that**
the booster piston (50) is connected to the actuator piston (40) by a projecting lug (52) sliding in a channel (42) of the actuator piston (40), or vice versa, to rotationally secure the two pistons (40, 50) and allow them free translational movement.

6. Braking system according to Claim 2,
**characterized in that**
the skirt (57) of the booster piston (50) is housed in an outer sleeve (80) connected to the housing (21) of the brake booster (20) and comprising a retaining member (81) passing through a guide slot of the skirt (57) and forming a rear stop for the collar (62) of the plunger piston (60).
